**Europäisches Patentamt**

(19) **European Patent Office**

**Office européen des brevets**

(11) Numéro de publication: **0 002 144**

**B1**

(12) **FASCICULE DE BREVET EUROPEEN**

(45) Date de publication du fascicule de brevet: **24.06.81**

(21) Numéro de dépôt: **78400160.4**

(22) Date de dépôt: **31.10.78**

(51) Int. Cl.³: **F 16 J 1/01, F 16 F 9/32, F 16 F 9/34, F 16 F 9/02**

(54) Piston perfectionné pour ressort pneumatique ou analogue.

(30) Priorité: **23.11.77 FR 7735195**

(43) Date de publication de la demande: **30.05.79 Bulletin 79/11**

(45) Mention de la délivrance du brevet: **24.06.81 Bulletin 81/25**

(84) Etats Contractants Désignés: **BE CH DE FR GB NL SE**

(56) Documents cités:
**DE - C - 864 516**
**FR - A - 1 068 224**
**FR - A - 1 300 653**
**FR - A - 1 336 987**
**FR - A - 1 370 477**
**FR - A - 1 385 007**
**FR - A - 1 528 511**
**FR - A - 1 540 380**
**FR - A - 2 100 215**
**FR - A - 2 311 967**
**FR - A - 2 335 929**

**FR - A - 2 347 575**
**GB - A - 1 191 679**
**US - A - 2 912 069**
**US - A - 3 072 954**

(73) Titulaire: **Société J.G. ALLINQUANT**
**119, Avenue Paul Vaillant Couturier**
**F-94250 Gentilly (FR)**

(72) Inventeur: **Allinquant, Jacques**
**41, Avenue Bosquet**
**F-75007 Paris (FR)**

(74) Mandataire: **de Boisse, Louis**
**37, Avenue Franklin D. Roosevelt**
**F-75008 Paris (FR)**

Courier Press, Leamington Spa, England.

# Piston perfectionné pour ressort pneumatique ou analogue

Dans le brevet français 75 38295 du 15 Décembre 1975 publié sous le n° 2 335 929 est décrit un ressort pneumatique dont le piston (qui porte le chiffre de référence 7) est muni d'un segment d'étanchéité (73) frottant contre la paroi du cylindre (1) et permettant au piston de guider la tige plongeuse (6) du ressort dans ce cylindre et de subdiviser ce dernier en deux chambres pneumatiques situées de part et d'autre du piston, lesquelles chambres sont reliées par un passage calibré (74) ménagé à travers le piston. De plus, ce brevet préconise la réalisation du corps de piston en une rondelle épaisse en "Nylon" ou autre matière plastique résistante et isolante.

La présente invention entre dans le cadre général de la réalisation d'un piston de ressort pneumatique ou analogue, mais se différencie quant à la conception du piston du brevet ci-dessus où le corps de piston d'une part et le segment d'étanchéité et de frottement d'autre part constituent des pièces distinctes, le segment étant rapporté sur la périphérie du corps de piston et formant avec celui-ci un assemblage hétérogène ramassé. La présente invention se rapprocherait à cet égard plutôt de la conception du brevet français 1 385 007 dans lequel le piston est monobloc et constitué d'une seule et unique pièce homogène venue de moulage présentant une configuration géométrique élaborée définie par des échancrures annulaires s'étendant tout autour d'une âme centrale massive pratiquement indéformable et définissant des jupes périphériques flexibles venant s'appliquer de façon étanche et coulissante contre la paroi du cylindre. Il est vrai que le piston est ici dépourvu de tout passage calibré le traversant, car il s'agit d'un piston de vérin et non pas de ressort pneumatique comme dans le premier brevet cité, mais l'homme de l'art sait que, pour passer du fonctionnement en vérin au fonctionnement en ressort pneumatique ou en amortisseur, il faut ménager un passage calibré à travers le piston pour permettre un écoulement contrôlé à travers celui-ci.

Conformément à l'une des caractéristiques de la présente invention, la matière de ce piston monobloc ainsi conformé est une matière plastique adéquate à faible coefficient de frottement, en l'espèce une résine acétal (polymère du formaldéhyde) désignée sous la marque "Delrin", permettant un coulissement aisé du piston malgré son contact permanent avec la paroi du cylindre et aussi, le cas échéant, avec la tige du système télescopique si le piston est monté coulissant sur celle-ci comme le premier brevet sus-mentionné.

Une telle résine est particulièrement intéressante du fait des facilitées de moulage qu'elle offre et qui permettent de réaliser très économiquement les pistons de l'invention, à configuration géométrique élaborée propre à leur conférer une faculté d'expansion de nature à assurer l'étanchéité lors du coulissement du piston.

Aussi la présente invention a-t-elle également pour caractéristique un piston tout d'une pièce en résine acétal, mais ayant du fait de sa configuration géométrique une certaine souplesse, malgré le caractère rigide de la matière plastique constitutive.

Ainsi le piston monobloc de la présente invention présente une échancrure annulaire qui sépare une âme centrale massive indéformable dans laquelle est pratiqué le passage calibré usuel pour l'écoulement du gaz sous pression à travers le piston, d'une jupe périphérique flexible conçue pour s'appliquer étroitement sur la paroi du cylindre, afin d'éviter une fuite de fluide entre cette jupe et le cylindre, le raccordement de ladite jupe à ladite âme qui est situé au droit de ladite échancrure pour en constituer le fond faisant en quelque sorte office de pseudo-articulation pour ladite jupe.

Cette échancrure annulaire, qui est coaxiale au piston, présente en coupe un profil de paroi en V qui va en s'évasant depuis le fond circulaire jusqu'à un débouché sur l'une des faces terminales du piston.

La description qui va suivre, en regard des dessins annexés, donnée à titre d'exemple non limitatif, fera bien comprendre comment l'invention peut être réalisée.

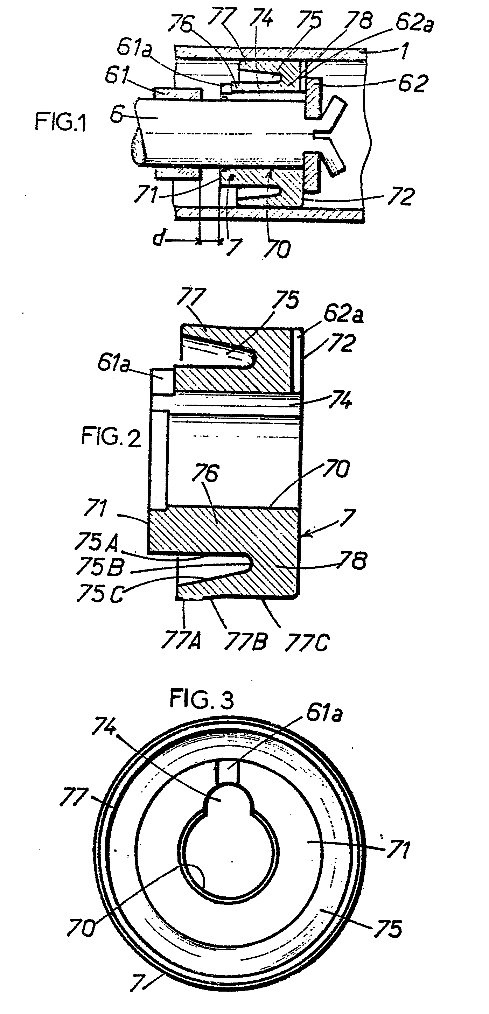

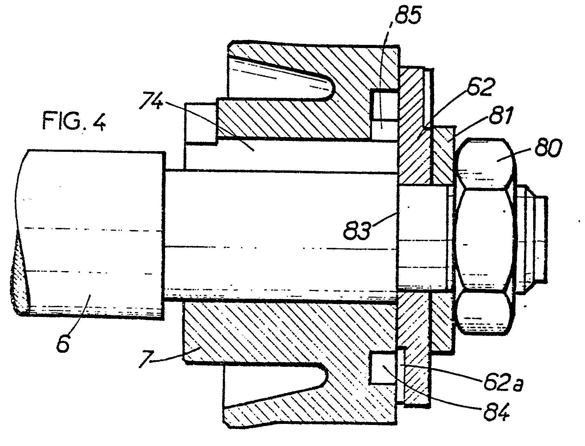

La figure 1 est une vue schématique partielle en coupe axiale d'un ressort pneumatique à piston conforme à la présente invention; la figure 2 est une vue en coupe axiale à plus grande échelle du piston; la figure 3 en est une vue en bout; la figure 4 montre une variante.

Comme dans les demandes de brevet sus-mentionnées, on a désigné par le repère 1 le cylindre d'un ressort pneumatique formant avec une tige plongeuse 6 un système télescopique. Le cylindre 1 qui est étanche est rempli d'un gaz sous pression tel que l'azote. Lors de l'introduction de la tige plongeuse 6 à l'intérieur du cylindre 1, il se produit une compression supplémentaire du gaz qui agit sur l'extrémité libre interne de la tige et tend à projeter celle-ci vers l'extérieur du cylindre.

Dans la zone de sont extrémité libre, la tige plongeuse 6 porte un piston 7 présentant deux faces d'extrémité 71, 72 et un alésage central 70 coaxial à la tige plongeuse et à travers lequel celle-ci est enfilée. Le piston 7 guide la tige plongeuse 6 dans le cylindre 1 et subdivise ce dernier en deux chambres situées de part et d'autre du piston. Il joue en outre un rôle d'amortisseur et est à cet effet traversé par une rainure axiale 74 débouchant sur chacune des faces d'extrémité 71, 72 et permettent de mettre en communication entre elles les deux chambres du cylindre 1.

Le piston 7 peut être fixé sur la tige plongeuse 6 ou, comme c'est le cas pour les demandes de brevet sus-mentionnées, monté à coulissement axial par rapport à cette tige entre deux butées 61, 62 solidaires d'elle et suffisamment écartées l'une de l'autre pour permettre une course *d* du piston 7 sur la tige 6 . Les faces du piston, qui coopèrent respectivement avec les butées 61, 62, sont creusées d'une rainure radiale 61a, 62a faisant communiquer la rainure axiale 74 avec l'extérieur quand le piston est appliqué sur une butée 61 ou 62. Ces rainures 61a, 62a sont calibrées différemment.

Le rôle de soupages joué par les butées 61, 62 à l'égard du passage du gaz à traverse le piston 7 pour provoquer un étranglement différent dans un sens et dans l'autre du mouvement de la tige plongeuse 6, est décrit dans les textes indiqués, et il paraît superflu de le répéter ici.

Une particularité de la présente invention réside dans la conception monobloc du piston à configuration spéciale.

Selon un mode d'exécution préféré, le piston 7 est moulé tout d'une pièce en la résine dénommée "Delrin" et présente une large échancrure annulaire coaxiale 75 délimitant de part et d'autre deux portions de piston: une âme centrale massive 76 dans laquelle est pratiquée la rainure 74 et une jupe périphérique mince 77, ces deux portions 76 et 77 étant raccordées par un col ou isthme 78 qui se comporte en pseudo-articulation pour la jupe 77.

La surface externe de celle-ci présente, vers son extrémité libre entourant le débouché de l'échancrure 75 sur la face 71 du piston, une portée cylindrique 77A se raccordant par une très faible rampe 77B à la partie terminale opposée 77C. La rampe 77B est telle que la jupe va en augmentant de diamètre de la droite à la gauche de la figure 2. L'échancrure 75 elle-même a un profil évasé en V déterminé par une paroi interne cylindrique 75A raccordée par un fond semi-torique 75B à une paroi externe tronconique 75C (voir figure 2).

La configuration décrite permet à la jupe périphérique 77 de s'appliquer étroitement sur la paroi du cylindre 1 en évitant la fuite de fluide entre piston et cylindre, ainsi que le coincement lors du déplacement du piston 7. La circulation du fluide d'un côté à l'autre du piston se fait donc uniquement par les passages calibrés prévus à cet effet dans le piston: rainure axiale 74, rainures radiales 61a et 62a.

Quand on veut obtenir un ralentissement du piston dans un sens de déplacement, il est nécessaire que la rainure radiale correspondante ait une section réduite, calibrée en fonction du ralentissement recherché. Ceci est le cas de la rainure 62a destinée à freiner le mouvement du piston dans le sens du mouvement où il est appliqué sur la butée 62.

Selon les applications, le calibrage de cette rainure 62a peut être différent.

La fabrication du piston par moulage oblige alors à avoir des moules différents correspondant aux divers calibrages.

Pour éviter cet inconvénient, on peut utiliser la variante représentée sur la figure 4. Dans cette variante, la rainure 62a est prévue, non plus sur le piston, mais sur la butée 62 elle-même.

Le piston est muni par moulage d'une gorge annulaire 84 qui communique par un large perçage 85 avec la rainure longitudinale 74.

Lors de l'application du piston contre la butée 62, le fluide arrivant dans la gorge 84 ne peut s'en échapper que par la rainure calibrée 62a de la butée 62.

Les positions angulaires relatives du piston et de cette butée sont indifférentes grâce à la présence de la gorge annulaire 84.

Pour faciliter le montage des pièces en évitant des erreurs, la rainure 62a peut être prévue sur chaque face de la butée 62 que le dessin montre serrée par un écrou 80 avec rondelle intermédiaire 81 contre un épaulement 83 de la tige 6.

Il est facile de réaliser les rainures radiales par usinage de ladite butée qui présente la forme simple d'une rondelle.

**Revendications**

1. Piston pour ressort pneumatique ou autre système télescopique à cylindre (1) et tige plongeuse (6), le piston (7) étant destiné à être monté coulissant dans le cylindre (1) pour y guider la tige plongeuse (6) et le subdiviser en deux chambres pneumatiques, situées de part et d'autre du piston (7) et reliées l'une à l'autre par un passage calibré (74) ménagé à travers le piston (7), lequel, tout en étant monobloc et constitué entièrement d'une seule et unique pièce homogène venue de moulage, présente une configuration géométrique élaborée définie par une échancrure annulaire (75) qui s'étend tout autour d'une âme centrale massive (76) pratiquement indéformable et qui sépare cette dernière d'une jupe périphérique flexible (77) venant s'appliquer de façon étanche et coulissante contre la paroi du cylindre (1), caractérisé en ce que la matière de ce piston monobloc (7) ainsi conformé est une résine acétal (polymére de formaldéhyde) et en ce que la flexibilité de la jupe périphérique (77) provient du raccordement (78) de celle-ci à l'âme centrale massive (76), qui est situé au droit de l'échancrure annulaire (75) pour en constituer le fond (75B) et qui fait en quelque sorte office de pseudo-articulation pour ladite jupe (77).

2. Piston selon la revendication 1, caractérisé en ce que l'échancrure annulaire (75), qui est coaxiale au piston (7), présente en coupe un profil de paroi (75A—75C) en V qui van en s'évasant depuis un fond circulaire (75B) jusqu'à un débouché sur l'une (71) des faces terminales du piston (7).

3. Dispositif de piston selon la revendication 1 ou 2 et de butée coopérante, caractérisé en ce que la butée (62) est munie d'une rainure radiale calibrée (62a), tandis que la face (72) du piston (7) destinée à s'appliquer sur cette butée (62) comporte une gorge annulaire (84) communiquant avec une rainure axiale (74) du piston (7) et destinée à alimenter la rainure radiale (62a) de la butée (62).

## Patentansprüche

1. Kolben für eine pneumatische Feder oder ein anderes Teleskopsystem mit einem Zylinder (1) und einer Tauchstange (6), auf der ein Kolben (7) angeordnet ist, der im Zylinder (1) gleitet, um in diesem die Tauchstange (6) zu führen und den Zylinder in zwei Gaskammern zu unterteilen, die beiderseits des Kolbens (7) liegen und über einen sich durch den Kolben (7) erstreckenden kalibrierten Durchlaß (74) miteinander verbunden sind, welcher Kolben, obwohl er aus einem einzigen gegossenen homogenen Stück besteht, eine komplizierte geometrische Form hat, die eine ringförmige Nut (75) aufweist, die einen massiven, praktisch starren Zentralbereich (76) umgibt und die diesen Bereich von einer flexiblen Umfangsmanschette (77) trennt, die dicht und gleitbar an der Zylinderwand (1) anliegt, dadurch gekennzeichnet, daß das Material des so ausgebildeten einstückigen Kolbens (7) ein Azetalharz (Polymer des Formaldehyds) ist und daß die Flexibilität der Umfangsmanschette (77) auf der gelenkartig wirkenden Verbindung (78) dieser Manschette mit dem massiven Zentralbereich (76) beruht, welche Verbindung (78) sich am Ort der ringförmigen Nut (75) befindet und deren Boden (75 B) bildet.

2. Kolben nach Anspruch 1, dadurch gekennzeichnet, daß die ringförmige Nut (75) koaxial zum Kolben (7) angeordnet ist und einen V-förmigen Querschnitt aufweist, der sich ausgehend von einem ringförmigen Boden (75 B) bis zu einer Öffnung an einer (71) der Endflächen des Kolbens (7) erweitert.

3. Vorrichtung mit einem Kolben nach Anspruch 1 oder 2 und einem mit dem Kolben zusammenwirkenden Anschlag, dadurch gekennzeichnet, daß der Anschlag (62) eine radiale kalibrierte Nut (62a) und die am Anschlag (62) zur Anlage kommende Fläche (72) des Kolbens (7) eine ringförmige Nut (84) aufweist, die mit einer axialen Nut (74) des Kolbens (7) kommuniziert und eine Strömungsverbindung zu der radialen Nut (62a) des Anschlages (62) bildet.

## Claims

1. Piston for pneumatic spring or other telescopic system with a cylinder (1) and plunger rod (6), the piston (7) being designed to be slidably fitted in the cylinder (1) for guiding therein the plunger rod (6) and subdividing it into two pneumatic chambers located on both sides of the piston (7) and connected with each other via a calibrated passage (74) formed through the piston (7) which, while being cast solid and constituted entirely of one and a single homogeneous moulded piece, presents an elaborate geometrical shape defined by an annular indentation (75) which extends all around a practically indeformable, bulky central core (76) and which separates the latter from a flexible peripheral skirt (77) tightly and slidably engaging the wall of the cylinder (1), characterised in that the material of this single-piece piston (7) thus shaped is an acetal resin (formaldehyde polymer) and in that the flexibility of the peripheral skirt (77) provides from its connection (78) to the bulky central core (76), which is located at the level of the annular indentation (75) to constitute the bottom (75B) thereof and which operates so as to speak as a sham hinge for said skirt (77).

2. Piston according to claim 1, characterised in that the annular indentation (75), which is coaxial to the piston (7), has in cross-section a V-shaped wall outline (75A—75C) which widens out from a circular bottom (75B) up to a mouth on one (71) of the end faces of the piston (7).

3. Device comprising a piston according to claim 1 or 2 and a cooperating stop, characterised in that the stop (62) is provided with a calibrated radial groove (62a), whereas the face (72) of the piston (7) which is designed to engage this stop (62) comprises an annular recess (84) communicating with an axial groove (74) of the piston (7) and designed to feed the radial groove (62a) of the stop (62).

0 0 0 2 1 4 4

FIG.1

FIG.2

FIG.3

1

FIG. 4